# EUROPÄISCHE PATENTSCHRIFT

(11) **EP 4 600 105 B1**
(45) Veröffentlichungstag und Bekanntmachung des Hinweises auf die Patenterteilung: **21.10.2026**
(21) Anmeldenummer: 24156571.2
(22) Anmeldetag: 08.02.2024
(51) Int. Cl.: B60W 50/02, B60C 23/04, B62D 5/32, B60W 50/14

(54) **VERFAHREN ZUR AUSGABE EINER LENKZUSTANDSINFORMATION**
METHOD FOR OUTPUTTING STEERING STATE INFORMATION
PROCÉDÉ DE SORTIE D'UNE INFORMATION D'ÉTAT DE DIRECTION

(43) Veröffentlichungstag der Anmeldung: 13.08.2025
(73) Patentinhaber: Deere & Company, Moline, IL 61265 (US)
(72) Erfinder: von Holst, Christian, Mannheim (DE); Schott, Florian, Mannheim (DE); Schaefer, Marc, Mannheim (DE); Hillebrand, Michael, Mannheim (DE)
(74) Vertreter: Dehnhardt, Florian Christopher

(56) Entgegenhaltungen:
- EP-B1- 3 523 179
- EP-B1- 3 797 059
- DE-A1- 102021 129 151

## Beschreibung

Die Erfindung betrifft ein Verfahren zur Ausgabe einer Lenkzustandsinformation an einen Fahrer eines landwirtschaftlichen Traktors.

Mit Bezug zum Automobilbereich ist ein solches Verfahren beispielsweise aus der EP 3 797 059 B1 bekannt. Dieses betrifft die Überwachung eines Funktionszustands eines Steer-by-Wire-Lenksystems in einem Automobil, wobei das Steer-by-Wire-Lenksystem bei Erkennung einer Fehlfunktion in einen Notlenkbetrieb umgeschaltet sowie der Fahrer hierüber durch Ausgabe elektrisch oder elektronisch erzeugter Signale in Kenntnis gesetzt wird.

Zur schonenden Feldbearbeitung verfügen moderne landwirtschaftliche Traktoren zunehmend über Einrichtungen zur Anpassung des Reifenfülldrucks. Dies erfolgt derart, dass der Reifenfülldruck vor dem Befahren einer zu bearbeitenden Feldoberfläche im Sinne einer gezielten Vergrößerung des Reifenlatschs und damit der Reifenaufstandsfläche abgesenkt wird, um den aufgrund des Traktorgewichts ausgeübten Flächendruck zur Vermeidung einer übermäßigen Verdichtung des Erdbodens zu reduzieren. An der lenkbaren Achse des landwirtschaftlichen Traktors führt eine Zunahme des Reifenlatschs jedoch zugleich zu einer Erhöhung des Lenkwiderstands. Dies gilt dementsprechend auch für das Betätigungsmoment, das seitens einer zur Verstellung der lenkbaren Räder vorgesehenen Lenkanlage aufzuwenden ist. Im Falle einer Beeinträchtigung der durch die Lenkanlage bereitgestellten Lenkunterstützung ist dieses Betätigungsmoment in einem Notlenkbetrieb vom Fahrer manuell über die Lenkhandhabe aufzubringen. Ein Lenken des landwirtschaftlichen Traktors ist in diesem Fall erschwert und führt vor allem bei höheren Fahrtgeschwindigkeiten, wie sie beispielsweise für eine Straßenfahrt typisch sind, zu einer unerwünschten bzw. übermäßigen Zunahme des Wendekreisdurchmessers. Ein solcher kritischer Lenkzustand kann für den Fahrer überraschend bzw. schwer einzuschätzen sein.

Es ist daher Aufgabe der vorliegenden Erfindung, ein Verfahren der eingangs genannten Art dahingehend anzugeben, dass der Fahrer hinsichtlich der rechtzeitigen Erkennung eines kritischen Lenkzustands des landwirtschaftlichen Traktors unterstützt wird.

Diese Aufgabe wird durch ein Verfahren zur Ausgabe einer Lenkzustandsinformation an einen Fahrer eines landwirtschaftlichen Traktors mit den Merkmalen des Patentanspruchs 1 gelöst.

Bei dem Verfahren zur Ausgabe einer Lenkzustandsinformation an einen Fahrer eines landwirtschaftlichen Traktors ist vorgesehen, dass an eine Kontrolleinheit über eine Datenschnittstelle bereitgestellte Informationen hinsichtlich eines montierten Reifenmodells bzw. -typs, eines Reifenfülldrucks, einer Achslast an einer Vorder- und/oder Hinterachse des landwirtschaftlichen Traktors und einer aktuellen Fahrtgeschwindigkeit des landwirtschaftlichen Traktors übermittelt werden, um davon ausgehend zu überprüfen, ob entweder
(i) als erste Auslösebedingung die aktuelle Fahrtgeschwindigkeit einen für einen Notlenkbetrieb vorgesehenen Grenzwert überschreitet, der nach Maßgabe des montierten Reifenmodells bzw. -typs, des Reifenfülldrucks sowie der Achslast vorgegeben wird, oder ob
(ii) als zweite Auslösebedingung der Reifenfülldruck einen für einen Notlenkbetrieb vorgesehenen Grenzwert unterschreitet, der nach Maßgabe des montierten Reifenmodells bzw. -typs, der Fahrtgeschwindigkeit sowie der Achslast vorgegeben wird,
wobei für den Fall, dass eine der beiden Auslösebedingungen erfüllt ist, von der Kontrolleinheit die Ausgabe einer auf einen kritischen Lenkzustand hinweisenden Fahrerinformation durch Ansteuerung einer Bedienerschnittstelle veranlasst wird.

Das Verfahren trägt hierbei Situationen Rechnung, in denen es aufgrund eines erhöhten Reifenlatschs an den lenkbaren Rädern des landwirtschaftlichen Traktors bei einem Notlenkbetrieb zu einem erschwerten Lenken des landwirtschaftlichen Traktors sowie abhängig von der Fahrtgeschwindigkeit des landwirtschaftlichen Traktors zu einer unerwünschten bzw. übermäßigen Zunahme des Wendekreisdurchmessers kommen kann. Ein Notlenkbetrieb liegt dann vor, wenn die durch die Lenkanlage des landwirtschaftlichen Traktors bereitgestellte Lenkunterstützung beeinträchtigt ist. Auf Grundlage der ausgegebenen Fahrerinformation erhält der Fahrer Gelegenheit, sein Fahrverhalten entweder durch Reduzierung der Fahrtgeschwindigkeit vorausschauend anzupassen oder aber eine rechtzeitige Anhebung des Reifenfülldrucks beispielsweise mittels einer Reifenfüllanlage vorzunehmen. Hierbei kann je nach erfüllter erster oder zweiter Auslösebedingung über die Bedienerschnittstelle eine dementsprechend angepasste Fahrerinformation ausgegeben werden, sodass der Fahrer einen eindeutigen Hinweis auf die Art der jeweils vorzunehmenden Gegenmaßnahmen bekommt.

Bei der Lenkanlage handelt es sich im Allgemeinen um eine in landwirtschaftlichen Traktoren übliche hydrostatische Fahrzeuglenkung mit einem aus einer Hochdruckpumpe mit Hydraulikflüssigkeit gespeisten Lenkorbitrol, das sich zur Auslenkung eines mit dem Lenkorbitrol kommunizierenden Lenkzylinders über die als Lenkrad ausgebildete Lenkhandhabe fahrerseitig in Drehung versetzen lässt. Der Lenkzylinder wiederum steht mit einer Achsschenkellenkung zur Verstellung der lenkbaren Räder des landwirtschaftlichen Traktors in Verbindung. Bei einem Ausfall oder fehlerhaften Betrieb der Hydraulikversorgung übernimmt das Lenkorbitrol die Aufgabe der Hochdruckpumpe, indem durch Drehen der Lenkhandhabe und damit des Lenkorbitrols ein zur Auslenkung des Lenkzylinders führender Hydraulikvolumenstrom erzeugbar ist. Unter solchen Umständen ist ein Lenken des landwirtschaftlichen Traktors zwar weiterhin möglich, erfordert jedoch einen entsprechend hohen Kraftaufwand seitens des Fahrers.

Die Vorgabe der Grenzwerte erfolgt daher derart, dass unter allen Umständen gewährleistet ist, dass der Fahrer den landwirtschaftlichen Traktor über die Lenkhandhabe mit einem gegebenen Betätigungsmoment innerhalb einer gegebenen Zeitspanne bei einer gegebenen Fahrtgeschwindigkeit unter Einhaltung eines gegebenen Wendekreisdurchmessers zu lenken vermag, selbst wenn die Lenkunterstützung seitens der Lenkanlage aufgrund einer Fehlfunktion vollständig wegfällt. Die entsprechenden Spezifikationen hierfür sind in der Norm ISO10998 niedergelegt.

Maßgeblich für die Größe des Reifenlatschs sind neben dem Reifenfülldruck ferner das an den lenkbaren Rädern montierte Reifenmodell bzw. der montierte Reifentyp sowie die auf die Reifen einwirkende Achslast. Letztere hängt wiederum von der Ballastierung des landwirtschaftlichen Traktors wie auch von gegebenenfalls daran angebrachten Zusatz- bzw. Anbaugeräten ab. Die lenkbaren Räder sind typischerweise der Vorderachse des landwirtschaftlichen Traktors zugeordnet, zusätzlich oder alternativ können diese jedoch auch an der Hinterachse vorgesehen sein. Denkbar ist zudem eine bei manchen landwirtschaftlichen Traktoren eingesetzte Knicklenkung.

Die über die Datenschnittstelle, insbesondere über einen im landwirtschaftlichen Traktor vorhandenen CAN-Datenbus bereitgestellten Informationen hinsichtlich des montierten Reifenmodells bzw. -typs können entweder auf Angaben beruhen, die der Fahrer menügeführt über die mit der Kontrolleinheit kommunizierende Bedienerschnittstelle eingibt, oder aber auf herstellerseitigen Reifendaten, die durch drahtloses Auslesen eines im Reifenwulst eingebetteten RFID-Tags mittels eines mit der Kontrolleinheit in Verbindung stehenden RFID-Lesegeräts erfasst werden.

Zur Ermittlung des Reifenfülldrucks können des Weiteren Drucksensoren dienen, die ebenfalls im Reifenwulst eingebettet sind, und die die zugehörigen Druckinformationen über eine drahtlose Kommunikationsverbindung an eine Reifenfüllanlage und von dort über den CAN-Datenbus an die Kontrolleinheit übertragen.

Bezüglich der Bereitstellung der auf die Achslast bezogenen Informationen gibt es mehrere Möglichkeiten. So können diese entweder auf einer unmittelbaren sensorischen Erfassung der Achslast beruhen, beispielsweise durch Auswertung der Druckverhältnisse einer hydraulischen Radfederung oder des Reifenfülldrucks in Verbindung mit dem Umfang einer beobachteten Reifendeformation. Es kann aber auch eine Beurteilung der aktuellen Ballastierung des landwirtschaftlichen Traktors erfolgen. Diese ergibt sich insbesondere aus dem Vorhandensein abnehmbarer (Rad-) Ballastgewichte, Zusatz- oder Anbaugeräte sowie einer (variablen) Zuladung. Beispielhaft sei hier ein Frontlader zur Aufnahme von Lade- bzw. Schüttgut, aber auch ein getragenes Arbeitsgerät an einem Dreipunkt-Kraftheber des landwirtschaftlichen Traktors erwähnt, so zum Beispiel ein Düngerstreuer zur Ausbringung von in einem Vorratsbehälter befindlichen Düngergranulat. Denkbar ist hier ein Einsatz von Wiegeeinrichtungen, wie sie in der EP 2 843 378 A1, der DE 10 2016 218 859 A1 oder der EP 3 315 926 A1 beschrieben sind. Im Falle abnehmbarer (Rad-) Ballastgewichte bekannter Masse kann auch eine unmittelbare Angabe seitens des Fahrers über die Bedienerschnittstelle erfolgen, die hierzu eine entsprechende menügeführte Eingabe vorsieht.

Weiterhin stehen die Informationen hinsichtlich der aktuellen Fahrtgeschwindigkeit des landwirtschaftlichen Traktors in Form von Raddrehzahlsignalen am CAN-Datenbus zur Verfügung.

Die mit der Kontrolleinheit kommunizierende Bedienerschnittstelle ist zur Ausgabe akustischer, optischer und/oder haptischer Hinweise ausgebildet, beispielsweise in Form von Signaltönen, Texthinweisen, auf die Lenkhandhabe aufgeschalteten Vibrationen und dergleichen.

Vorteilhafte Weiterbildungen des erfindungsgemäßen Verfahrens gehen aus den Unteransprüchen hervor.

Um die Ausgabe unnötiger und damit gegebenenfalls störender Fahrerinformationen zu vermeiden, erfolgt die Ansteuerung der Bedienerschnittstelle ausschließlich dann, wenn von der Kontrolleinheit eine bevorstehende oder bereits bestehende Funktionseinschränkung der Lenkung bzw. Lenkanlage erkannt wird, beispielsweise aufgrund eines hierfür charakteristischen Hydraulikdruckabfalls in der Hydraulikversorgung des Lenkorbitrols.

Ferner ist es denkbar, dass von der Kontrolleinheit bei Erfüllung der ersten Auslösebedingung neben der Ausgabe der Fahrerinformation die Fahrtgeschwindigkeit des landwirtschaftlichen Traktors durch Eingreifen in ein Antriebsmanagementsystem selbsttätig auf einen vorgegebenen Höchstwert begrenzt bzw. reduziert wird. Der Höchstwert wird typischerweise in der Größenordnung von 10 bis 20 km/h vorgegeben.

Dementsprechend besteht die Möglichkeit, dass von der Kontrolleinheit bei Erfüllung der zweiten Auslösebedingung neben der Ausgabe der Fahrerinformation zugleich der Reifenfülldruck durch Ansteuerung der Reifenfüllanlage selbsttätig angehoben wird. Die Anhebung erfolgt bevorzugt auf einen für eine Straßenfahrt vorgesehenen Wert.

In beiden Fällen wird der Fahrer hinsichtlich der Vermeidung kritischer Lenkzustände aktiv unterstützt.

Um ein für den Fahrer unerwartetes Eingreifen in das Antriebsmanagementsystem oder die Reifenfüllanlage auszuschließen, kann zusätzlich vorgesehen sein, dass die Begrenzung bzw. Reduzierung der Fahrtgeschwindigkeit oder die Anhebung des Reifenfülldrucks erst nach vorheriger Freigabe durch den Fahrer, beispielsweise über die Bedienerschnittstelle, erfolgt.

Das erfindungsgemäße Verfahren wird im Folgenden anhand der beigefügten Zeichnungen näher erläutert. Es zeigen:
- Fig. 1: ein Ausführungsbeispiel des erfindungsgemäßen Verfahrens zur Ausgabe einer Lenkzustandsinformation an einen Fahrer eines landwirtschaftlichen Traktors, und
- Fig. 2: eine beispielhafte Anordnung in einem landwirtschaftlichen Traktor zur Durchführung des in Fig. 1 wiedergegebenen Verfahrens.

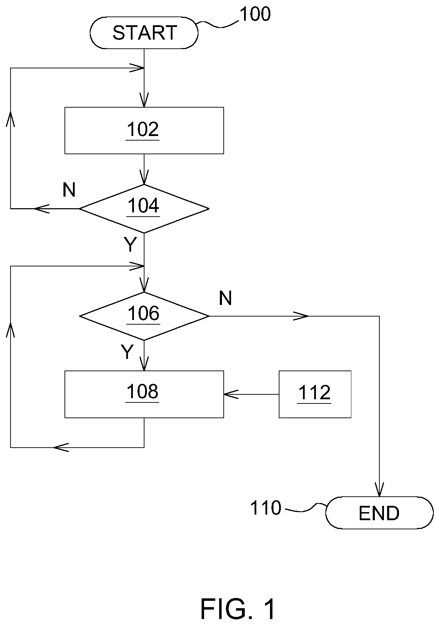

Fig. 1 zeigt ein als Flussdiagramm wiedergegebenes Ausführungsbeispiel des erfindungsgemäßen Verfahrens zur Ausgabe einer Lenkzustandsinformation an einen Fahrer eines landwirtschaftlichen Traktors.

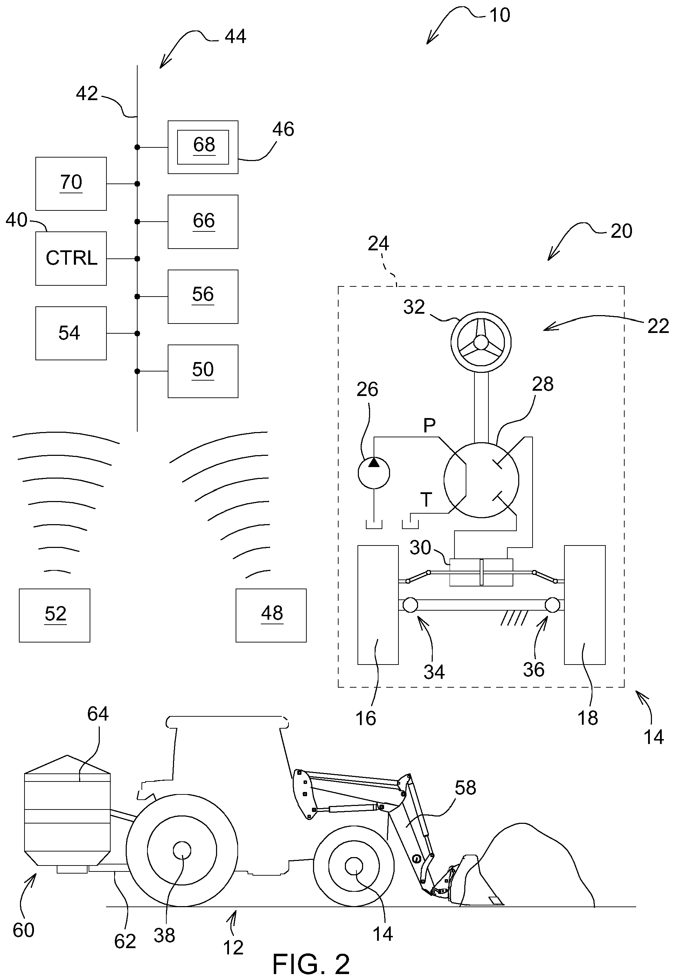

Zum besseren Verständnis soll zunächst auf die in Fig. 2 schematisch dargestellte Anordnung 10 eingegangen werden, die zur Durchführung des Verfahrens entsprechend Fig. 1 dient und Bestandteil des landwirtschaftlichen Traktors 12 ist.

Beispielsgemäß weist der in Fig. 2 gezeigte landwirtschaftliche Traktor 12 einer Vorderachse 14 zugeordnete lenkbare Räder 16, 18 auf, die sich mittels einer Lenkanlage 20 über eine fahrerseitig betätigbare Lenkhandhabe 22 bezüglich ihres Radlenkwinkels verstellen lassen. Bei der Lenkanlage 20 handelt es sich um eine hydrostatische Fahrzeuglenkung 24 mit einem aus einer Hochdruckpumpe 26 mit Hydraulikflüssigkeit gespeisten Lenkorbitrol 28, das sich zur Auslenkung eines mit dem Lenkorbitrol 28 kommunizierenden Lenkzylinders 30 über die als Lenkrad 32 ausgebildete Lenkhandhabe 22 fahrerseitig in Drehung versetzen lässt. Der Lenkzylinder 30 wiederum steht mit einer Achsschenkellenkung 32, 34 zur Verstellung der lenkbaren Räder 16, 18 des landwirtschaftlichen Traktors 12 in Verbindung. Bei einem Ausfall oder fehlerhaften Betrieb der Hydraulikversorgung übernimmt das Lenkorbitrol 28 die Aufgabe der Hochdruckpumpe 26, indem durch Drehen der Lenkhandhabe 22 und damit des Lenkorbitrols 28 ein zur Auslenkung des Lenkzylinders 30 führender Hydraulikvolumenstrom erzeugbar ist. Unter solchen Umständen ist ein Lenken des landwirtschaftlichen Traktors 12 zwar weiterhin möglich, erfordert jedoch einen entsprechend hohen Kraftaufwand seitens des Fahrers.

Auch wenn die lenkbaren Räder 16, 18 im vorliegenden Fall der Vorderachse 14 des landwirtschaftlichen Traktors 12 zugeordnet sind, können diese je nach Bauart des landwirtschaftlichen Traktors 12 zusätzlich oder alternativ auch an der Hinterachse 38 vorgesehen sein. Denkbar ist zudem eine bei manchen landwirtschaftlichen Traktoren eingesetzte Knicklenkung.

Wie ferner in Fig. 2 zu sehen ist, umfasst die im landwirtschaftlichen Traktor 12 befindliche Anordnung 10 eine mikroprozessorgesteuerte Kontrolleinheit 40, der über eine als CAN-Datenbus 42 ausgebildete Datenschnittstelle 44 Informationen hinsichtlich eines an dem landwirtschaftlichen Traktor 12 montierten Reifenmodells bzw. -typs, eines Reifenfülldrucks, einer Achslast sowie der aktuellen Fahrtgeschwindigkeit des landwirtschaftlichen Traktors 12 übermittelt werden. Hierbei genügt es, wenn sich die genannten Informationen jeweils auf die mit den lenkbaren Rädern 16, 18 ausgestattete Achse beschränken, hier also auf die Vorderachse 14 des landwirtschaftlichen Traktors 12.

Die über den CAN-Datenbus 42 bereitgestellten Informationen hinsichtlich des montierten Reifenmodells bzw. -typs beruhen entweder auf Angaben, die der Fahrer menügeführt über eine mit der Kontrolleinheit 40 kommunizierende Bedienerschnittstelle 46 eingibt, oder aber auf herstellerseitigen Reifendaten, die durch drahtloses Auslesen eines im Reifenwulst eingebetteten RFID-Tags 48 mittels eines mit der Kontrolleinheit 40 über den CAN-Datenbus 42 in Verbindung stehenden RFID-Lesegeräts 50 erfasst werden.

Zur Ermittlung des Reifenfülldrucks dienen des Weiteren Drucksensoren 52, die ebenfalls im Reifenwulst eingebettet sind und die die zugehörigen Druckinformationen über eine drahtlose Kommunikationsverbindung an eine Reifenfüllanlage 54 und von dort über den CAN-Datenbus 42 an die Kontrolleinheit 40 übertragen.

Bezüglich der Bereitstellung der auf die Achslast bezogenen Informationen gibt es mehrere Möglichkeiten, die in Fig. 2 abstrakt durch eine Achslastermittlungseinrichtung 56 repräsentiert sind. So beruhen die betreffenden Informationen entweder auf einer unmittelbaren sensorischen Erfassung der Achslast, beispielsweise durch Auswertung der Druckverhältnisse einer hydraulischen Radfederung oder des Reifenfülldrucks in Verbindung mit dem Umfang einer beobachteten Reifendeformation. Es kann aber auch eine Beurteilung der aktuellen Ballastierung des landwirtschaftlichen Traktors 12 erfolgen. Diese ergibt sich insbesondere aus dem Vorhandensein abnehmbarer (Rad-) Ballastgewichte, Zusatz- oder Anbaugeräte sowie einer (variablen) Zuladung. Entsprechend der Darstellung in Fig. 2 ist ein Frontlader 58 zur Aufnahme von Lade- bzw. Schüttgut sowie ein getragenes Arbeitsgerät 60 an einem Dreipunkt-Kraftheber 62 des landwirtschaftlichen Traktors 12 in Gestalt eines Düngerstreuers 64 zur Ausbringung von in einem Vorratsbehälter befindlichen Düngergranulat vorhanden. Denkbar ist hier ein Einsatz von Wiegeeinrichtungen, wie sie in der EP 2 843 378 A1, der DE 10 2016 218 859 A1 oder der EP 3 315 926 A1 beschrieben sind. Im Falle abnehmbarer (Rad-) Ballastgewichte bekannter Masse erfolgt indes eine unmittelbare Angabe seitens des Fahrers über die Bedienerschnittstelle 46, die hierzu eine entsprechende menügeführte Eingabe vorsieht.

Weiterhin stehen die Informationen hinsichtlich der aktuellen Fahrtgeschwindigkeit des landwirtschaftlichen Traktors 12 in Form von Raddrehzahlsignalen am CAN-Datenbus 42 zur Verfügung. Ein Antriebsmanagementsystem 66 erlaubt hierbei eine gezielte Beeinflussung der Fahrtgeschwindigkeit seitens der Kontrolleinheit 40.

Die mit der Kontrolleinheit 40 kommunizierende Bedienerschnittstelle 46 bietet nicht nur die Möglichkeit fahrerseitiger Eingaben über eine von dieser umfasste berührungsempfindliche Bedienoberfläche 68, sondern ist auch zur Ausgabe akustischer, optischer und/oder haptischer Hinweise ausgebildet, beispielsweise in Form von Signaltönen, Texthinweisen, auf die Lenkhandhabe 22 aufgeschalteten Vibrationen und dergleichen.

Das von der Kontrolleinheit 40 ausgeführte und in einer zugehörigen Speichereinheit 70 als entsprechender Programmcode hinterlegte Verfahren wird gemäß Fig. 1 in einem Startschritt 100 initiiert. Hierbei werden in einem ersten Hautschritt 102 zunächst die über den CAN-Datenbus 42 bereitgestellten Informationen in Bezug auf das montierte Reifenmodell bzw. -typ, den Reifenfülldruck, die Achslast und die aktuelle Fahrtgeschwindigkeit des landwirtschaftlichen Traktors 12 ausgelesen und in der Speichereinheit 70 temporär abgelegt.

In einem nachfolgenden zweiten Hauptschritt 104 wird von der Kontrolleinheit 40 überprüft, ob eine bevorstehende oder bereits bestehende Funktionseinschränkung der Lenkung bzw. Lenkanlage 20 und damit ein Notlenkbetrieb vorliegt. Ein Notlenkbetrieb liegt dann vor, wenn die durch die Lenkanlage 20 des landwirtschaftlichen Traktors 12 bereitgestellte Lenkunterstützung beeinträchtigt ist. Ist dies der Fall, so wird mit einem dritten Hauptschritt 106 fortgefahren. Andernfalls kehrt das Verfahren zum ersten Hauptschritt zurück.

Ausgehend von den im ersten Hauptschritt 102 ausgelesenen Informationen wird von der Kontrolleinheit 40 im dritten Hauptschritt 106 überprüft, ob entweder
(i) als erste Auslösebedingung die aktuelle Fahrtgeschwindigkeit einen für den Notlenkbetrieb vorgesehenen Grenzwert überschreitet, der nach Maßgabe des montierten Reifenmodells bzw. -typs, des Reifenfülldrucks sowie der Achslast vorgegeben wird, oder ob
(ii) als zweite Auslösebedingung der Reifenfülldruck einen für den Notlenkbetrieb vorgesehenen Grenzwert unterschreitet, der nach Maßgabe des montierten Reifenmodells bzw. -typs, der Fahrtgeschwindigkeit sowie der Achslast vorgegeben wird.

Ist eine der beiden vorgenannten Auslösebedingungen erfüllt, so wird mit einem vierten Hauptschritt 108 fortgefahren, in dem von der Kontrolleinheit 40 die Ausgabe einer auf einen kritischen Lenkzustand hinweisenden Fahrerinformation durch Ansteuerung der Bedienerschnittstelle 46 veranlasst wird. Je nach erfüllter erster oder zweiter Auslösebedingung wird die Ausgabe der Fahrerinformation von der Kontrolleinheit 40 durch entsprechende Auswahl der mittels der Bedienerschnittstelle 46 erzeugbaren akustischen, optischen und/oder haptischen Hinweise derart angepasst, dass der Fahrer einen eindeutigen Hinweis auf die Art der zu ergreifenden Gegenmaßnahmen erhält. So erhält der Fahrer die Gelegenheit, sein Fahrverhalten entweder durch Reduzierung der Fahrtgeschwindigkeit vorausschauend anzupassen oder aber eine rechtzeitige Anhebung des Reifenfülldrucks mittels der Reifenfüllanlage 54 vorzunehmen.

Der zweite Hauptschritt 104 dient dazu, die Ausgabe unnötiger und damit gegebenenfalls störender Fahrerinformationen zu vermeiden, indem die Ansteuerung der Bedienerschnittstelle 46 ausschließlich dann erfolgt, wenn von der Kontrolleinheit 40 eine bevorstehende oder bereits bestehende Funktionseinschränkung der Lenkung bzw. Lenkanlage 20 erkannt wird, beispielsweise aufgrund eines hierfür charakteristischen Hydraulikdruckabfalls in der Hydraulikversorgung des Lenkorbitrols 28.

Ungeachtet der jeweils erfüllten Auslösebedingung erfolgt die Ausgabe der entsprechenden Fahrerinformation jeweils solange, bis von der Kontrolleinheit 40 im vierten Hauptschritt 108 erkannt wird, dass der für die Fahrtgeschwindigkeit bzw. den Reifenfülldruck vorgegebene Grenzwert nicht länger überschritten bzw. unterschritten ist. Anschließend wird das Verfahren in einem Schlussschritt 110 beendet, um mit dem Startschritt 100 von vorne zu beginnen.

Die Vorgabe der im vierten Hauptschritt 108 herangezogenen Grenzwerte erfolgt derart, dass unter allen Umständen gewährleistet ist, dass der Fahrer den landwirtschaftlichen Traktor 12 über die Lenkhandhabe 22 mit einem gegebenen Betätigungsmoment innerhalb einer gegebenen Zeitspanne bei einer gegebenen Fahrtgeschwindigkeit unter Einhaltung eines gegebenen Wendekreisdurchmessers zu lenken vermag, selbst wenn die Lenkunterstützung seitens der Lenkanlage 20 aufgrund einer Fehlfunktion vollständig wegfällt. Die entsprechenden Spezifikationen hierfür sind in der Norm ISO10998 niedergelegt.

Optional wird im vierten Hautschritt 108 von der Kontrolleinheit 40 bei Erfüllung der ersten Auslösebedingung neben der Ausgabe der Fahrerinformation die Fahrtgeschwindigkeit des landwirtschaftlichen Traktors 12 durch Eingreifen in ein Antriebsmanagementsystem 66 (siehe Fig. 2) selbsttätig auf einen vorgegebenen Höchstwert begrenzt bzw. reduziert wird. Der Höchstwert wird in der Größenordnung von 10 bis 20 km/h vorgegeben.

Analog hierzu wird von der Kontrolleinheit 40 bei Erfüllung der zweiten Auslösebedingung neben der Ausgabe der Fahrerinformation zugleich der Reifenfülldruck durch Ansteuerung der Reifenfüllanlage 54 selbsttätig angehoben. Die Anhebung erfolgt auf einen für eine Straßenfahrt vorgesehenen Wert.

In beiden Fällen wird der Fahrer hinsichtlich der Vermeidung kritischer Lenkzustände aktiv unterstützt.

Um ein für den Fahrer unerwartetes Eingreifen in die Reifenfüllanlage 54 bzw. das Antriebsmanagementsystem 66 auszuschließen, ist in einem Nebenschritt 112 zusätzlich vorgesehen, dass die Begrenzung bzw. Reduzierung der Fahrtgeschwindigkeit oder die Anhebung des Reifenfülldrucks erst nach vorheriger Freigabe durch den Fahrer über die Bedienerschnittstelle 46 erfolgt.

Im Ergebnis trägt das erfindungsgemäße Verfahren Situationen Rechnung, in denen es aufgrund eines erhöhten Reifenlatschs an den lenkbaren Rädern 16, 18 des landwirtschaftlichen Traktors 12 bei einem Notlenkbetrieb zu einem erschwerten Lenken des landwirtschaftlichen Traktors 12 sowie abhängig von der Fahrtgeschwindigkeit des landwirtschaftlichen Traktors 12 zu einer unerwünschten bzw. übermäßigen Zunahme des Wendekreisdurchmessers kommen kann. Denn maßgeblich für die Größe des Reifenlatschs sind neben dem Reifenfülldruck ferner das an den lenkbaren Rädern 16, 18 montierte Reifenmodell bzw. der montierte Reifentyp sowie die auf den Reifen einwirkende Achslast. Letztere hängt wiederum von der Ballastierung des landwirtschaftlichen Traktors 12 wie auch von gegebenenfalls daran angebrachten Zusatz- bzw. Anbaugeräten ab.

## Patentansprüche

1. Verfahren zur Ausgabe einer Lenkzustandsinformation an einen Fahrer eines landwirtschaftlichen Traktors, bei dem an eine Kontrolleinheit (40) über eine Datenschnittstelle (44) bereitgestellte Informationen hinsichtlich eines montierten Reifenmodells bzw. -typs, eines Reifenfülldrucks, einer Achslast an einer Vorder- und/oder Hinterachse (14, 38) des landwirtschaftlichen Traktors (12) und einer aktuellen Fahrtgeschwindigkeit des landwirtschaftlichen Traktors (12) übermittelt werden, um davon ausgehend zu überprüfen, ob entweder
(i) als erste Auslösebedingung die aktuelle Fahrtgeschwindigkeit einen für einen Notlenkbetrieb vorgesehenen Grenzwert überschreitet, der nach Maßgabe des montierten Reifenmodells bzw. -typs, des Reifenfülldrucks sowie der Achslast vorgegeben wird, oder ob
(ii) als zweite Auslösebedingung der Reifenfülldruck einen für einen Notlenkbetrieb vorgesehenen Grenzwert unterschreitet, der nach Maßgabe des montierten Reifenmodells bzw. -typs, der Fahrtgeschwindigkeit sowie der Achslast vorgegeben wird,
wobei für den Fall, dass eine der beiden Auslösebedingungen erfüllt ist, von der Kontrolleinheit (40) die Ausgabe einer auf einen kritischen Lenkzustand hinweisenden Fahrerinformation durch Ansteuerung einer Bedienerschnittstelle (46) veranlasst wird.

2. Verfahren nach Anspruch 1, **dadurch gekennzeichnet, dass** die Ansteuerung der Bedienerschnittstelle (46) ausschließlich dann erfolgt, wenn von der Kontrolleinheit (40) eine bevorstehende oder bereits bestehende Funktionseinschränkung der Lenkung erkannt wird.

3. Verfahren nach Anspruch 1 oder 2, **dadurch gekennzeichnet, dass** von der Kontrolleinheit (40) bei Erfüllung der ersten Auslösebedingung neben der Ausgabe der Fahrerinformation die Fahrtgeschwindigkeit des landwirtschaftlichen Traktors (12) durch Eingreifen in ein Antriebsmanagementsystem (66) selbsttätig auf einen vorgegebenen Höchstwert begrenzt bzw. reduziert wird.

4. Verfahren nach Anspruch 1 oder 2, **dadurch gekennzeichnet, dass** von der Kontrolleinheit (40) bei Erfüllung der zweiten Auslösebedingung neben der Ausgabe der Fahrerinformation zugleich der Reifenfülldruck durch Ansteuerung der Reifenfüllanlage (54) selbsttätig angehoben wird.

5. Verfahren nach Anspruch 3 oder 4, **dadurch gekennzeichnet, dass** die Begrenzung bzw. Reduzierung der Fahrtgeschwindigkeit oder die Anhebung des Reifenfülldrucks erst nach vorheriger Freigabe durch den Fahrer erfolgt.

## Claims

1. Method for outputting steering state information to a driver of an agricultural tractor, in which information, provided via a data interface (44), regarding a fitted tyre model or type, a tyre inflation pressure, an axle load on a front and/or rear axle (14, 38) of the agricultural tractor (12) and a current travelling speed of the agricultural tractor (12) is transmitted to a control unit (40) in order to check, on the basis of that information, whether either
(i) as a first triggering condition, the current travelling speed exceeds a limit value provided for emergency steering operation, said limit value being specified according to the fitted tyre model or type, the tyre inflation pressure and the axle load, or whether
(ii) as a second triggering condition, the tyre inflation pressure is below a limit value provided for the emergency steering operation, said limit value being specified according to the fitted tyre model or type, the travelling speed and the axle load,
wherein, in the event that one of the two triggering conditions is met, the outputting of driver information indicating a critical steering state is effected by the control unit (40) by activation of a user interface (46).

2. Method according to Claim 1, **characterized in that** the user interface (46) is activated only when an imminent or already existing functional limitation of the steering mechanism is recognized by the control unit (40).

3. Method according to Claim 1 or 2, **characterized in that**, when the first triggering condition is met, the control unit (40), in addition to outputting the driver information, automatically limits or reduces the travelling speed of the agricultural tractor (12) to a specified maximum value by intervention in a drive management system (66).

4. Method according to Claim 1 or 2, **characterized in that**, when the second triggering condition is met, the control unit (40), in addition to outputting the driver information, at the same time automatically increases the tyre inflation pressure by activation of the tyre inflation system (54).

5. Method according to Claim 3 or 4, **characterized in that** the limitation or reduction of the travelling speed or the increase of the tyre inflation pressure takes place only after it has previously been approved by the driver.

## Revendications

1. Procédé permettant de sortir une information d'état de direction à l'intention d'un conducteur d'un tracteur agricole, dans lequel des informations, fournies par l'intermédiaire d'une interface de données (44), concernant un modèle ou type de pneu installé, une pression des pneus, une charge à l'essieu sur un essieu avant et/ou arrière (14, 38) du tracteur agricole (12) et une vitesse de conduite actuelle du tracteur agricole (12) sont transmises à une unité de contrôle (40) afin de vérifier sur cette base si, soit
(i) comme première condition de déclenchement, la vitesse de conduite actuelle dépasse une valeur limite prévue pour un fonctionnement de direction de secours qui est prédéfinie conformément au modèle ou type de pneu installé, à la pression des pneus ainsi qu'à la charge à l'essieu, soit
(ii) comme deuxième condition de déclenchement, la pression des pneus dépasse une valeur limite prévue pour un fonctionnement de direction de secours qui est prédéfinie conformément au modèle ou type de pneu installé, à la pression des pneus ainsi qu'à la charge à l'essieu,
dans lequel, au cas où l'une des deux conditions de déclenchement serait satisfaite, l'unité de contrôle (40) provoque la sortie d'une information de conducteur signalant un état de direction critique par la commande d'une interface utilisateur (46).

2. Procédé selon la revendication 1, **caractérisé en ce que** la commande de l'interface utilisateur (46) est effectuée uniquement si l'unité de contrôle (40) détecte une restriction fonctionnelle imminente ou préexistante de la direction.

3. Procédé selon la revendication 1 ou 2, **caractérisé en ce que** si la première condition de déclenchement est satisfaite, en plus de la sortie de l'information de conducteur, l'unité de contrôle (40) limite ou réduit automatiquement la vitesse de conduite du tracteur agricole (12) à une valeur maximale prédéfinie en intervenant sur un système de gestion d'entraînement (66).

4. Procédé selon la revendication 1 ou 2, **caractérisé en ce que** lorsque la deuxième condition de déclenchement est satisfaite, en plus de la sortie de l'information de conducteur, l'unité de contrôle (40) augmente automatiquement en même temps la pression des pneus par la commande du dispositif de gonflage des pneus (54).

5. Procédé selon la revendication 3 ou 4, **caractérisé en ce que** la limitation ou la réduction de la vitesse de conduite ou l'augmentation de la pression des pneus est effectuée seulement après validation préalable par le conducteur.
